# EUROPÄISCHE PATENTSCHRIFT

(11) **EP 2 686 926 B1**
(45) Veröffentlichungstag und Bekanntmachung des Hinweises auf die Patenterteilung: **08.10.2014**
(21) Anmeldenummer: 12715629.7
(22) Anmeldetag: 19.03.2012
(51) Int. Cl.: H01T 13/56, G01L 23/22

(54) **ZÜNDKERZE MIT SENSORFUNKTION**
SPARK PLUG WITH SENSOR FUNCTION
BOUGIE D'ALLUMAGE AYANT UNE FONCTION DE CAPTEUR

(30) Priorität: 18.03.2011 AT 3922011
(43) Veröffentlichungstag der Anmeldung: 22.01.2014
(73) Patentinhaber: Piezocryst Advanced Sensorics GmbH, 8020 Graz (AT)
(72) Erfinder: STRMSEK, Robert, 2311 Hoce (SI); BAUMGARTNER, Martin, A-8522 Groß St. Florian (AT)
(74) Vertreter: Weiss, Christian
(86) Internationale Anmeldenummer: PCT/EP2012/054789
(87) Internationale Veröffentlichungsnummer: WO 2012/126880

(56) Entgegenhaltungen:
- EP-A2- 0 441 157
- EP-B1- 1 074 828
- WO-A1-2011/069732
- FR-A- 1 195 868
- GB-A- 178 950
- GB-A- 2 154 278
- US-A- 4 989 557

## Beschreibung

Die Erfindung betrifft eine Zündkerze mit Sensorfunktion, mit einem Gehäuse und mit zumindest einer im Gehäuse angeordneten Messeinrichtung, wobei als eine der Messeinrichtungen eine Druckmesseinrichtung vorgesehen ist und ein Druckmesselement aufweist, das in einer brennraumseitigen Ausnehmung des Gehäuses angeordnet ist und das Druckmesselement ein von einer Sensormembran mit Druck beaufschlagtes piezoelektrisches Element aufweist.

Eine wesentliche Größe für die Beurteilung des Verbrennungsablaufes von Verbrennungskraftmaschinen ist der im Brennraum herrschende Druck. Dabei soll möglichst wenig zusätzlicher Aufwand nötig sein, insbesondere soll für die Druckmessung keine zusätzliche Bohrung im Brennraum vorgesehen sein müssen. Daher wurde bereits vorgeschlagen, eine Zündkerze zusätzlich für die Druckmessfunktion zu adaptieren. Derartige Zündkerzen verwenden Druckmesseinrichtungen, welche im Gehäuse der Zündkerze angeordnet sind.

Um den zur Verfügung stehenden Platz für die Druckmesseinrichtung zu vergrößern, sind druckmessende Zündkerzen entwickelt worden, deren Längsbohrung für den Isolator außermittig im Kerzengehäuse angeordnet ist, sodass ein Bereich kleiner und ein Bereich großer Wandstärke im Kerzengehäuse gebildet wird und in letzterem die Druckmesseinrichtung angeordnet werden kann. Beispielsweise ist in der EP 1074828 B1 eine Variante mit einer durchgehenden, außermittig im Gehäuse ausgebildeten Längsbohrung zur Aufnahme eines Isolators geoffenbart, bei welcher in einem Bereich größerer Wandstärke eine Druckmesseinrichtung angeordnet ist. Der Isolator ist dabei mehrteilig ausgebildet und besteht zumindest aus einem den Hochspannungsanschluss aufweisenden Isolatoroberteil und einem dem Brennraum zugewandten Isolatorunterteil, zwischen welchen ein isolierendes, elastisches Füllelement angeordnet ist. Damit können, ohne beispielsweise eines wie bei der EP 0 441 157 A vorgesehenen gekröpften Adapterteils, Anschlussmasse wie bei einer herkömmlichen Zündkerze erreicht und gleichzeitig Isolatorbrüche vermieden werden.

Die Aufgabe der vorliegenden Erfindung war eine Zündkerze mit Sensorfunktion der eingangs angegebenen Art anzugeben, welche es erlaubt die Pfeifenschwingungsfrequenz deutlich zu beeinflussen , welche bei möglichst einfacher Herstellung und Montage eine große Freiheit für die Einstellung der Funkenlage und Anordnung von Messeinrichtungen bietet und doch von den Abmessungen und Anschlussmaßen möglichst gut herkömmlichen Zündkerzen entspricht.

Für eine Zündkerze mit Messfunktion ist die Aufgabe eine baulich einfache Weiterbildung, die einen einfachen und raschen Zusammenbau und gegebenenfalls einen Austausch der elektrischen Teile ermöglicht.

Zur Lösung dieser Aufgabe weist die Sensormembran im zentralen Bereich eine Verdickung auf wobei die Verdickung im Wesentlichen zur Gänze nach außen, vom piezoelektrischen Element wegweisend, gerichtet ist. Bei einer druckmessenden Zündkerze kann damit das Schadvolumen einer Serienkerze nachgebildet werden, indem der Atmungsraum der Serienkerze durch den Atmungsraum der druckmessenden Kerze zusammen mit deren seitlichen Abfräsung mit der hutförmigen Membran ersetzt ist. Durch die große seitliche Membrane wird überdies ganz automatisch die Pfeifenschwingung teilweise gefiltert und/oder gemittelt. Bei Vorhandensein eines Indizierkanales kann die Verdickung im zentralen Bereich der Membran die Indizierkanallänge reduzieren und somit die Pfeifenschwingungsfrequenz deutlich beeinflussen. Durch ein schräges Aufsetzen der Membran auf die Messelemente wird die Membrane unterschiedlich verformt, wobei durch die erfindungsgemäß gewählte Form das thermische Verhalten der Membran vergleichmäßigt werden kann.

Aufgrund der Membranform mit dem massiven, nach außen weisenden Bereich, ist eine sehr geringe Bauhöhe des meist piezoelektrischen Drucksensors möglich, da sich der massive Teil größtenteils außerhalb des Sensors befindet. Die wie beschrieben geformte Membran ermöglicht auch eine möglichst kleine Oberfläche bei einem bestimmten Volumen zu erhalten.

In einer weiteren vorteilhaften Ausgestaltung weist die Zündkerze einen Isolatoroberteil mit einem Hochspannungsanschluss und einem dem Brennraum zugewandten Isolatorunterteil geringeren oder gleichen Durchmessers im Vergleich zum Isolatoroberteil auf, wobei am Isolatorunterteil, vorzugsweise an dessen an den Isolatoroberteil grenzenden oberem Ende, eine ein Außengewinde aufweisende Überwurfmutter vorzugsweise unverlierbar befestigt ist. Damit ist eine einfache und sichere Montage des Isolators im Gehäuse der Messzündkerze gewährleistet.

Gemäß einer vorteilhaften Ausführungsform der Erfindung ist am Isolatorunterteil zumindest ein Widerlager mit einer auf den Isolatoroberteil hin gerichteten Schulter für die Befestigung der Überwurfmutter vorgesehen, vorzugsweise eine Verdickung am Isolatorunterteil oder durch eine umlaufende Einkerbung. Damit ist eine einfache und rasche Vorbereitung des Isolators auf den Einbau in der Messzündkerze möglich.

Eine Variante sieht dabei vor, dass der dem Isolatoroberteil zugewandte Rand der Überwurfmutter nach innen hin verdickt oder umgebördelt ist und derart die Schulter am Isolatorunterteil hintergreift

Alternativ dazu könnte auch vorgesehen sein, dass zwischen der Schulter und der Überwurfmutter zumindest ein Halteelement eingebracht ist, das den Querschnittsunterschied zwischen einem Haltebereich der Überwurfmutter und der Schulter des Isolatorunterteils überbrückt, vorzugsweise ein Federring, Sicherungsring oder ein eingepresster Biegestab.

Eine weitere Ausführungsform der Erfindung ist dadurch gekennzeichnet, dass die Überwurfmutter in ihrer Längsebene geteilt ausgeführt ist. Dabei können die beiden Hälften der Überwurfmutter mit ihren die Schulter hintergreifenden Abschnitten in genau dieser hintergreifenden Längsposition angeordnet und anschließend aneinandergelegt und zusammengefügt werden, um derart die zusammengefügte Mutter am Isolator zu befestigen.

Um gleichzeitig mit der einfachen Montage und den Anforderungen betreffend Einbauraum auch die Anschlüsse möglichst unverändert beibehalten zu können, sind gemäß einer weiteren Ausführungsform der Erfindung der Isolatoroberteil und der Isolatorunterteil jeweils im Wesentlichen radialsymmetrisch ausgeführt, wobei die Achsen des Isolatorunterteils und der daran befestigten Überwurfmutter radial gegenüber der Achse des Isolatoroberteils versetzt sind und somit der Isolatorunterteil exzentrisch am Isolatoroberteil ansetzt.

Vorzugsweise ist dabei der Isolatoroberteil einstückig mit dem Isolatorunterteil ausgeführt.

Weiters kann vorzugsweise vorgesehen sein, dass zumindest der Hochspannungsanschluss im Wesentlichen einer herkömmlichen Zündkerze entspricht.

Eine Zündkerze ist vorteilhaft dadurch gekennzeichnet, dass der Isolator gemäß einem der vorhergehenden Absätze ausgeführt und mittels der Überwurfmutter in eine Gewindebohrung des Gehäuses eingeschraubt ist. Die Bohrung kann dabei im Wesentlichen koaxial oder parallel zur Längsachse der Zündkerze ausgeführt oder auch um einen kleinen Winkel dagegen geneigt sein.

Eine derartige Zündkerze ist vorteilhafterweise zusätzlich dadurch gekennzeichnet, dass die Bohrung im Gehäuse außermittig angeordnet ist, wobei allein der Isolatorunterteil in der außermittigen Bohrung aufgenommen ist.

Eine vorteilhafte Ausführungsform der soeben beschriebenen Zündkerze ist dadurch gekennzeichnet, dass die Bohrung im Wesentlichen koaxial zur Zündkerzenachse liegt und der gegenüber dem Isolatorunterteil exzentrisch angeordnete Isolatoroberteil ebenfalls koaxial und vorzugsweise radialsymmetrisch zur Zündkerzenachse ausgerichtet ist.

Eine andere erfindungsgemäße Ausführungsform einer Zündkerze ist dadurch gekennzeichnet, dass der Isolatorunterteil mit einer auf sein freies Ende hin gerichteten weiteren Schulter versehen ist, und dass in der Bohrung im Gehäuse der Zündkerze ein Anschlag für die Schulter des Isolators in einem Abstand vom brennraumseitigen Ende der Bohrung vorgesehen ist, der in Verbindung mit der Länge des Isolatorunterteils unterhalb der weiteren Schulter die gewünschte Funkenlage ergibt, sobald der Isolator in die Bohrung eingeschraubt ist.

Dabei ist vorteilhafterweise am Isolatoroberteil eine Anschlussmutter vorgesehen, deren Länge derart bemessen ist, dass die Gesamtlänge zwischen einer Schulter am Gehäuse bis zum oberen Ende der Anschlussmutter einer üblichen Zündkerze entspricht.

In der nachfolgenden Beschreibung soll die Erfindung anhand von Ausführungsbeispielen und unter Bezugnahme auf die beigefügten Zeichnungen näher erläutert werden.

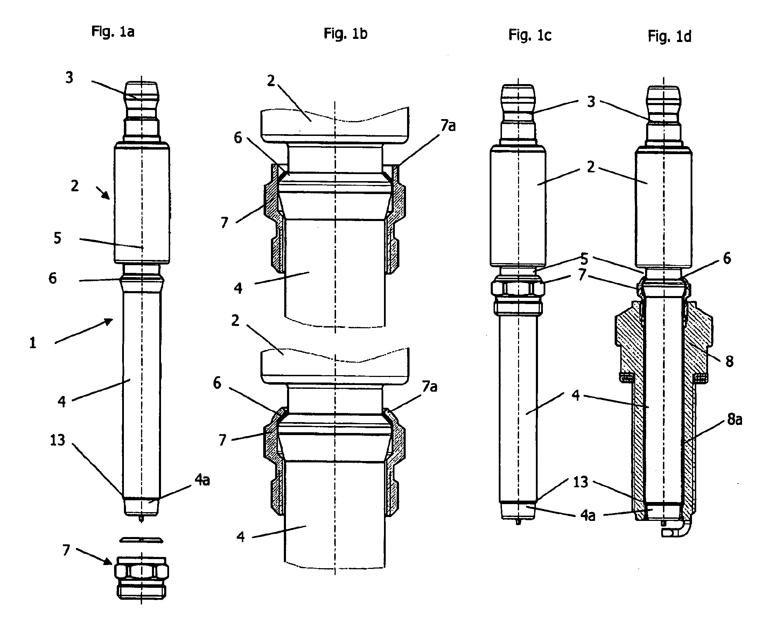

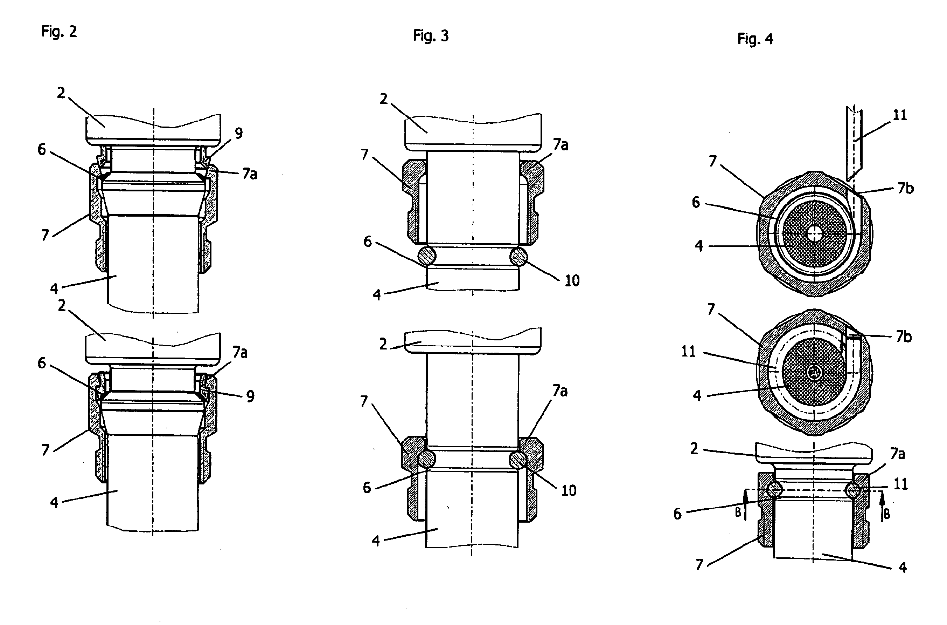

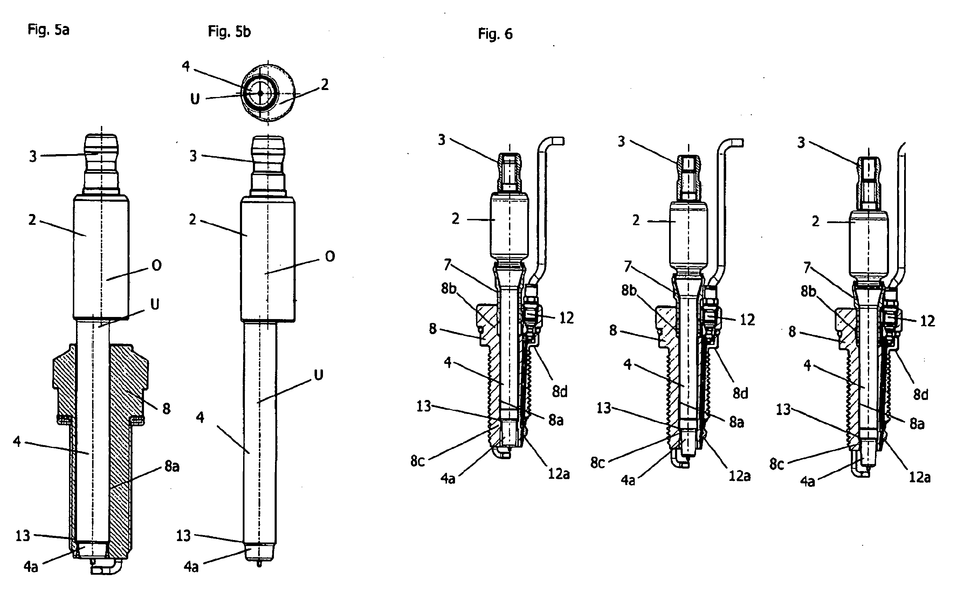

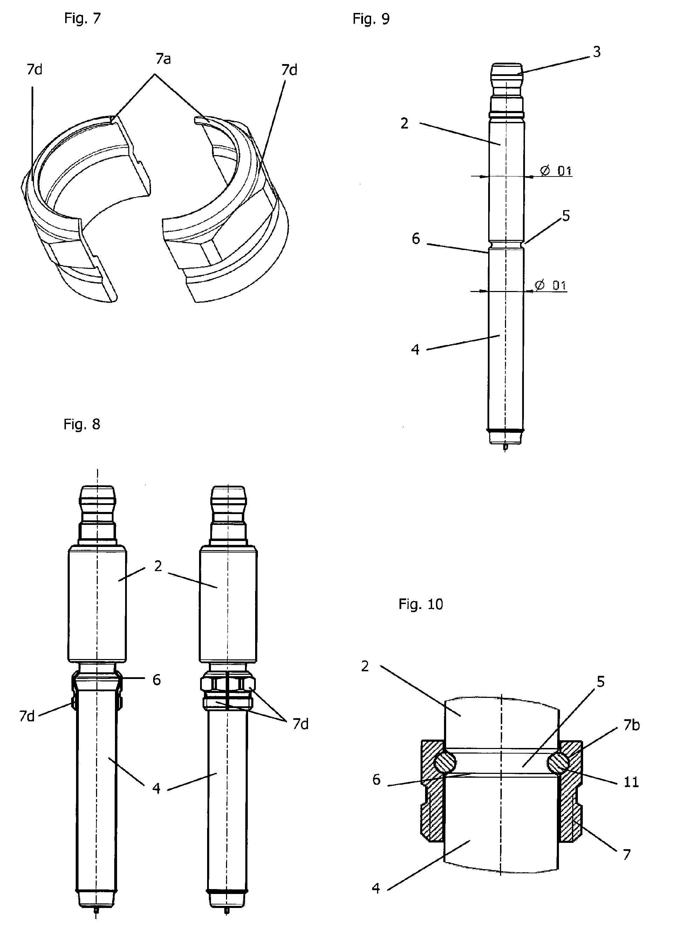

Dabei zeigen die Fig. 1a bis 1d einen Isolator und eine Überwurfmutter in einer ersten Ausführungsform in verschiedenen Stadien der Montage, die Fig. 2 bis 4 zeigen weitere Ausführungsformen für die Montage der Überwurfmutter am Isolator, Fig. 5a und 5b zeigen eine vorteilhafte Bauart für einen erfindungsgemäßen Isolator, Fig. 6 zeigt einige Beispiele für Zündkerzen mit verschiedenen Funkenlagen mit ein und demselben Isolator, Fig. 7 ist eine Ansicht einer geteilten Überwurfmutter in Explosionsansicht, Fig. 8 zeigt im linken Teil eine Hälfte der Überwurfmutter der Fig. 7 an einem Isolator und in der rechten Hälfte die Überwurfmutter der Fig. 7, vollständig montiert auf einem Isolator, Fig. 9 ist eine Seitenansicht eines Isolators in einer weiteren erfindungsgemäßen Ausführungsform und Fig. 10 zeigt eine Schnittansicht einer Überwurfmutter, die mit einem Zusatzbauteil am Isolator der Fig. 9 montiert ist.

Der in Fig. 1 dargestellte Isolator 1 ist im Prinzip für jede Art von Zündkerze geeignet, insbesondere aber für eine Zündkerze mit Sensorfunktion. Der Isolator 1 weist einen Isolatoroberteil 2 auf, der als Hochspannungsanschluss vorzugsweise eine Anschlussmutter 3 trägt. Zumindest die dem Hochspannungsanschluss dienenden Teile des Isolators 1 entsprechen bei dieser vorteilhaften Ausführungsform derart im Wesentlichen den entsprechenden Teilen einer herkömmlichen Zündkerze. Dem Brennraum des Zylinders näherliegend weist der Isolator 1 einen Isolatorunterteil 4 auf, der gegenüber dem Isolatoroberteil 2 einen geringeren Durchmesser bzw. eine geringere Querschnittsfläche aufweist. Auch eine durchgehend gleiche Querschnittsfläche bzw. gleicher Durchmesser beider Isolatorteile 2, 4 wäre möglich, wie die Ausführungform der Fig. 9 zeigt.

Im Bereich des Übergangs zwischen Isolatoroberteil 2 und Isolatorunterteil 4, welche vorzugsweise aus einem Stück ausgeführt sind, ist über einen Teil der Länge des Isolatorunterteils 4 eine Querschnittsverengung 5 vorgesehen, die in Richtung Brennraum gegebenenfalls von einer geringen Querschnittsverdickung gefolgt sein kann, wobei in jedem Fall eine dem Isolatoroberteil 2 zugewandte und von dessen Unterseite etwas beabstandete Schulter 6 ausgebildet ist. Wie bei der Ausführungsform des Isolators 1 gemäß Fig. 9 mit gleichem Durchmesser von Isolatoroberteil 2 und Isolatorunterteil 4 erkennbar ist, kann die Querschnittsverengung 5 auch durch eine umlaufenden Einkerbung, Ausfräsung oder Nut gebildet sein, die die beiden Abschnitte 2,4 des Isolators 1 trennt. Die Schulter 6 ist dann durch den Rand der Nut an der dem Isolatorunterteil 4 zugewandten Seite gebildet.

Um den Isolator 1 vorzugsweise auswechselbar in einer Zündkerze verwenden zu können, wird eine in Fig. 1a noch getrennt vom Isolator 1 dargestellte und mit einem Außengewinde versehene Überwurfmutter 7 am gemäß dieser speziellen Ausführungsform dünneren Isolatorunterteil 4 vorzugsweise unverlierbar befestigt. Wie in Fig. 1b zu erkennen ist, wird die Überwurfmutter 7 bis über Schulter 6 hinweg auf den Isolatorunterteil 4 aufgeschoben, wonach die Befestigung beispielsweise durch Umbördeln des oberen Randes 7a der Überwurfmutter 7 in die Querschnittsverengung 5 hinein erfolgen kann. Der umgebördelte obere Rand 7a hintergreift dann die Schulter 6 am Isolatorunterteil 4, so dass sich eine ohne mechanische Beschädigung zumindest eines der Bauteile untrennbare Einheit (siehe Fig. 1c) aus Isolator 1 und Überwurfmutter 7 ergibt, die als ein Bauteil in das Gehäuse 8 einer Zündkerze eingeschraubt werden kann, wie in Fig. 1d dargestellt ist.

Weitere Möglichkeiten für die unverlierbare Befestigung der Überwurfmutter 7, neben der natürlich auch denkbaren Befestigung durch Verkleben, sind in den Fig. 2 bis 4 gezeigt.

So kann zwischen der Schulter 6 und der Überwurfmutter 7 zumindest ein Halteelement 9, 10 oder 11 eingebracht sein, das einen allfälligen Querschnittsunterschied zwischen einem Haltebereich der Überwurfmutter 7 und der Schulter 6 des Isolatorunterteils 4 überbrückt. Das kann, wie in Fig. 2 gezeigt, beispielsweise ein geschlitzter und somit über den Isolatorunterteil 4 aufstreifbarer Federring 9 sein. Beim Aufschieben der Überwurfmutter 7 über den Isolatorunterteil 4 und weiter über den Federring 9 wird dieser von einer nach innen weisenden Kante am oberen Rand 7a der Überwurfmutter 7 zusammengepresst. Nach weiterem Aufschieben der Überwurfmutter 7 kann sich der Federring 9 wieder ausdehnen und gegebenenfalls mit einer eigenen Kante hinter der Kante der Überwurfmutter 7 einrasten. Überwurfmutter 7 und Federring 9 hintergreifen dann als eine Einheit die Schulter 6 am Isolatorunterteil 4, wodurch wieder die Überwurfmutter 7 unverlierbar am Isolator 1 befestigt ist.

Es könnte als weitere, in Fig. 3 dargestellte, alternative Befestigungsmethode für die Überwurfmutter 7 diese zuerst auf den Isolatorunterteil 4 aufgeschoben werden, und zwar so weit, dass die Schulter 6 frei liegt. Nach der Überwurfmutter 7 wird dann ein Sicherungsring 10 in die Querschnittsverengung 5 eingebracht, dessen Umfang so groß ist, dass der obere Rand 7a der Überwurfmutter 7 nicht wieder über den auf der Schulter 6 aufliegenden Sicherungsring 10 und damit nicht wieder über die Schulter 6 abgestreift werden kann.

Die Fig. 4 zeigt eine weitere mögliche Ausführungsform für eine unverlierbare Befestigung der Überwurfmutter 7 am Isolator 1. Dabei ist die Überwurfmutter 7 vorzugsweise an ihrem oberen Rand 7a mit einer innenliegenden und umlaufenden Nut 7b versehen. Durch eine tangentiale Bohrung 7c kann ein Biegestab 11 in die Nut 7b eingepresst werden, so dass sich dieser Biegestab 11 im Bereich der Querschnittsverengung 5 um den Isolatorunterteil 4 herumwindet und auf der Schulter 6 aufliegt. Der obere Rand 7a der Überwurfmutter 7 hintergreift dann den auf der Schulter 6 aufliegenden Biegestab 11 und kann damit nicht wieder vom Isolator 1 abgestreift werden.

Alle genannten Varianten können selbstverständlich auch bei der Ausführungsform des Isolators 1 mit gleich dickem Isolatorunterteil 4 und Isolatoroberteil 2 vorgesehen sein. Als Beispiel ist in Fig. 10 in die Variante mit dem Biegestab 11 dargestellt, der in die umlaufende Nut 5 des Isolators 1 als auch die umlaufende Nut der Überwurfmutter 7 eingepresst wird.

Eine weitere Ausführungsform der Erfindung ist in den Fig. 7 und 8 dargestellt. Hier ist die Überwurfmutter 7 in ihrer Längsebene geteilt ausgeführt, wie in der Explosionsausstellung der Fig. 7 mit den beiden Hälften 7d in getrennter Stellung zu erkennen ist. Die beiden Hälften 7d der Überwurfmutter 7 werden mit ihren die Schulter 6 am Isolator 1 hintergreifenden Abschnitten, vorzugsweise wieder den oberen Rändern 7a, in genau dieser hintergreifenden Längsposition angeordnet und anschließend um den Isolator 1 herum aneinandergelegt und zusammengefügt, um derart die zusammengefügte Überwurfmutter 7 am Isolator 1 zu befestigen, wie in der Fig. 8 dargestellt ist.

Speziell für Zündkerzen mit Sensorfunktion, deren Gehäuse 8 auch Messeinrichtungen wie beispielsweise Drucksensoren aufnehmen müssen und daher exzentrische Bohrungen 8a für die Aufnahme der Isolatoren 1 aufweisen, ist eine erfindungsgemäße Ausführungsform eines Isolators 1 wie in Fig. 5 dargestellt besonders vorteilhaft.

Die Bohrungen 8a können dabei prinzipiell in beliebigen kleinen Winkeln gegenüber der Längsachse der Zündkerze geneigt sein. Bei den hier dargestellten Beispielen ist eine vorteilhafte Anordnung dargestellt, bei welcher die Bohrungen 8a koaxial zur Längsachse der Zündkerze angeordnet sind.

Sowohl der Isolatoroberteil 2 als auch ein gegebenenfalls dünnere bzw. mit geringerer Querschnittsfläche gestaltete Isolatorunterteil 4 sind jeweils im Wesentlichen radialsymmetrisch ausgeführt. Um nun der Exzentrizität der Bohrung 8a im Gehäuse 8 der Zündkerze als auch der erwünschten zentrischen Ausführung des oberen Abschnittes der Zündkerze Rechnung zu tragen, ist dabei die Achse U des Isolatorunterteils 4 und damit auch jene der daran befestigten Überwurfmutter 7 (in Fig. 5 nicht dargestellt) radial gegenüber der Achse O des Isolatoroberteils 2 versetzt. Wie in der Ansicht der Fig. 5b vom Brennraum her deutlich wird, setzt somit der Isolatorunterteil 4 exzentrisch am Isolatoroberteil 2 an. Auch bei dieser Ausführungsform der Fig. 5 sind vorteilhafterweise der Isolatoroberteil 2 und der Isolatorunterteil 4 einstückig ausgeführt.

Bereits in den Fig. 1d und 5a ist die Montage des erfindungsgemäßen Isolators 1 mithilfe der Überwurfmutter 7 im Gehäuse 8 einer Zündkerze mit Messfunktion angedeutet. In den Fig. 6a bis 6c ist eine derartige Zündkerze mit mehr Details dargestellt, um weitere Aspekte der vorliegenden Erfindung zu erläutern.

Die beispielhaft dargestellte Zündkerze mit Sensorfunktion weist ein Gehäuse 8 mit einer durchgehenden Bohrung 8a zur Aufnahme des Isolators 1 auf. Weiters ist zumindest eine Messeinrichtung 12, vorzugsweise eine Druckmesseinrichtung, im Gehäuse 8 angeordnet. Wie in den vorhergehenden Abschnitten erläutert worden ist, ist der Isolator 1 mittels der Überwurfmutter 7 in eine Gewindebohrung 8b des Gehäuses 8 eingeschraubt. Vorzugsweise ist die Bohrung 8a im Gehäuse 8 außermittig angeordnet, um ausreichend Einbauraum für die Messeinrichtung 12 zu bieten, und ist allein der Isolatorunterteil 4 in der außermittigen Bohrung 8a aufgenommen. Bei der vorteilhaften Ausführungsform des Isolators 1 mit einem exzentrisch gegenüber dem Isolatoroberteil 2 vorgesehenem und allenfalls auch dünnerem Isolatorunterteil 4, wie in den Fig. 5a und 5b dargestellt, kann der Isolatoroberteil 2 koaxial und vorzugsweise radialsymmetrisch zur Zündkerzenachse ausgerichtet sein und damit einen Anschluss an das Zündsystem wie eine herkömmliche Zündkerze gestatten.

Eine Druckmesseinrichtung 12, die im Prinzip für jede beliebige Zündkerze mit Sensorfunktion, unabhängig von der konkreten Ausgestaltung von Gehäuse und/oder Isolator, vorgesehen sein kann, weist ein Druckmesselement 12a am brennraumseitigen Ende des Gehäuses 8 der Zündkerze auf, das in einer brennraumseitigen Ausnehmung des Gehäuses 8 angeordnet ist. Typischerweise weist das Druckmesselement 12a ein von einer Sensormembran mit Druck beaufschlagtes piezoelektrisches Element auf, wobei die Sensormembran im zentralen Bereich eine Verdickung aufweist, die im Wesentlichen zur Gänze nach außen, vom piezoelektrischen Element wegweisend, ausgerichtet ist.

Aufgrund dieser Membranform, mit einem massiven Teil außerhalb des Druckmesselementes 12a, ist eine sehr geringe Bauhöhe des eigentlichen Drucksensors bzw. piezoelektrischen Elementes möglich. Weiters kann das Schadvolumen einer Serienkerze besser als bei üblichen Sensorkerzen nachgebildet werden. Der Atmungsraum der Serienkerze wird nun durch den Atmungsraum der druckmessenden Kerze und deren seitliche Abfräsung mit der Membran ersetzt.

Durch die große seitliche Membrane wird die Pfeifenschwingung automatisch teilweise gefiltert bzw. gemittelt, insbesondere bei Vorhandensein eines Indizierkanales kann die "Hutform" der Membran mit ihren zentralen Verdickung die Indizierkanallänge reduzieren und somit die Pfeifenschwingungsfrequenz deutlich beeinflussen.

Durch ein schräges Aufsetzen der Membran auf das piezoelektrische Element des Druckmesselementes 12a wird die Membran unterschiedlich verformt, wobei aber durch die spezielle Formgebung mit Verdickung im zentralen Bereich das thermische Verhalten der Membran vergleichmäßigt wird.

Auch ist die Form mit nach außen weisender Verdickung dazu vorteilhaft, dass eine möglichst kleine Oberfläche bei einem bestimmten vorgegebenen Volumen zu erhalten ist. Durch diese Art der Anbindung ist überdies nicht nur eine radiale oder eine axiale Befestigung möglich, sondern es kann durch einen Schweißvorgang die Membran an zwei Auflageflächen fixiert werden.

Für die praktische Anwendung ist bei Zündkerzen mit Messfunktion die Möglichkeit zur Einstellung der Funkenlage erwünscht. Während bei der herkömmlichen Bauweise von Messzündkerzen für jede Funkenlage ein separater Isolator vorgesehen sein musste, kann bei der nachfolgend erläuterten erfindungsgemäßen Isolatorkonstruktion und Art und Weise von dessen Montage im Gehäuse der Zündkerze mit einer Isolatorausführung das Auslangen gefunden werden, was den technischen und logistischen Aufwand und damit auch die Kosten für die Herstellung als auch die Lagerhaltung wesentlich vermindert.

Der erfindungsgemäße Isolator 1 weist einen Isolatorunterteil 4 mit einer auf sein freies Ende, d.h. den Brennraum, hin gerichteten weiteren Schulter 13 auf. Die Länge des brennraumseitigen Isolatorendes 4a unterhalb der weiteren Schulter 13 ist konstant. Jedoch ist in unterschiedlichen Abständen vom unteren Ende des Gehäuses 8 der Zündkerze in der Bohrung 8a ein Anschlag 8c für die Schulter 13 des Isolators 1 vorgesehen. Der Abstand dieses Anschlags 8c zum brennraumseitigen Ende der Bohrung 8a ist derart bemessen, dass sich in Verbindung mit der Länge des Isolatorendes 4a unterhalb der weiteren Schulter 13 die gewünschte Funkenlage ergibt, sobald der Isolator 1 in die Bohrung 8a eingeschraubt ist. Um dabei die Gesamtlänge der Zündkerze konstant zu halten, ist die Länge der am Isolatoroberteil 4 vorgesehenen Anschlussmutter 3 derart bemessen ist, dass die Gesamtlänge zwischen einer Schulter 8d am Gehäuse 8 bis zum oberen Ende der Anschlussmutter 3 der einer üblichen Zündkerze entspricht.

## Patentansprüche

1. Zündkerze mit Sensorfunktion, mit einem Gehäuse (8) und mit zumindest einer im Gehäuse (8) angeordneten Messeinrichtung (12), wobei als eine der Messeinrichtungen (12) eine Druckmesseinrichtung vorgesehen ist und ein Druckmesselement (12a) aufweist, das in einer brennraumseitigen Ausnehmung des Gehäuses (8) angeordnet ist und das Druckmesselement (12a) ein von einer Sensormembran mit Druck beaufschlagtes piezoelektrisches Element aufweist **dadurch gekennzeichnet, dass** die Sensormembran im zentralen Bereich eine Verdickung aufweist **und dass** die Verdickung im Wesentlichen zur Gänze nach außen, vom piezoelektrischen Element wegweisend, gerichtet ist.

2. Zündkerze nach Anspruch 1, **dadurch gekennzeichnet, dass** die Zündkerze einen Isolator (1) mit einem Isolatoroberteil (2) mit einem Hochspannungsanschluss aufweist und einem dem Brennraum zugewandten Isolatorunterteil (4) geringeren oder gleichen Durchmessers im Vergleich zum Isolatoroberteil (2) aufweist **und dass** am Isolatorunterteil (4), vorzugsweise an dessen an den Isolatoroberteil (2) grenzenden oberem Ende, eine ein Außengewinde aufweisende Überwurfmutter (7) vorzugsweise unverlierbar befestigt ist.

3. Zündkerze nach Anspruch 2, **dadurch gekennzeichnet, dass** am Isolatorunterteil (4) zumindest ein Widerlager mit einer auf den Isolatoroberteil (2) hin gerichteten Schulter (6) für die Befestigung der Überwurfmutter (7) vorgesehen ist, vorzugsweise eine Verdickung am Isolatorunterteil (4) oder durch eine umlaufende Einkerbung.

4. Zündkerze nach Anspruch 3, **dadurch gekennzeichnet, dass** der dem Isolatoroberteil (2) zugewandte Rand (7a) der Überwurfmutter (7) nach innen hin verdickt oder umgebördelt ist und derart die Schulter (6) am Isolatorunterteil (4) hintergreift.

5. Zündkerze nach Anspruch 3, **dadurch gekennzeichnet, dass** zwischen der Schulter (6) und der Überwurfmutter (7) zumindest ein Halteelement (9, 10, 11) eingebracht ist, das den Querschnittsunterschied zwischen einem Haltebereich (7a) der Überwurfmutter (7) und der Schulter (6) des Isolatorunterteils (4) überbrückt, vorzugsweise ein Federring (9), Sicherungsring (10) oder ein eingepresster Biegestab (11).

6. Zündkerze nach Anspruch 3, **dadurch gekennzeichnet, dass** die Überwurfmutter (7) in ihrer Längsebene geteilt ausgeführt ist.

7. Zündkerze nach einem der Ansprüche 2 bis 6, **dadurch gekennzeichnet, dass** der Isolatoroberteil (2) und der Isolatorunterteil (4) jeweils im Wesentlichen radialsymmetrisch ausgeführt sind, wobei die Achsen (U) des Isolatorunterteils (4) und der daran befestigten Überwurfmutter (7) radial gegenüber der Achse (O) des Isolatoroberteils (2) versetzt ist und somit der Isolatorunterteil (4) exzentrisch am Isolatoroberteil (2) ansetzt.

8. Zündkerze nach einem der Ansprüche 2 bis 7, **dadurch gekennzeichnet, dass** der Isolatoroberteil (2) einstückig mit dem Isolatorunterteil (4) ausgeführt ist.

9. Zündkerze nach einem der Ansprüche 2 bis 8, **dadurch gekennzeichnet, dass** zumindest der Hochspannungsanschluss im Wesentlichen einer herkömmlichen Zündkerze entspricht.

10. Zündkerze nach einem der Ansprüche 2 bis 9, **dadurch gekennzeichnet, dass** der Isolator (1) mittels der Überwurfmutter (7) in eine Gewindebohrung (8b) des Gehäuses (8) eingeschraubt ist.

11. Zündkerze nach einem der Ansprüche 2 bis 10, **dadurch gekennzeichnet, dass** eine durchgehende Bohrung (8a) im Gehäuse (8) außermittig angeordnet ist, wobei allein der Isolatorunterteil (4) in der außermittigen Bohrung (8a) aufgenommen ist.

12. Zündkerze nach einem der Ansprüche 2 bis 11, **dadurch gekennzeichnet, dass** die Bohrung (8a) im Wesentlichen koaxial zur Zündkerzenachse liegt und der gegenüber dem Isolatorunterteil (4) exzentrisch angeordnete Isolatoroberteil (2) ebenfalls koaxial und vorzugsweise radialsymmetrisch zur Zündkerzenachse ausgerichtet ist.

13. Zündkerze nach einem der Ansprüche 2 bis 12, **dadurch gekennzeichnet, dass** der Isolatorunterteil (4) mit einer auf sein freies Ende hin gerichteten weiteren Schulter (13) versehen ist, und dass in der Bohrung (8a) im Gehäuse (8) der Zündkerze ein Anschlag (8c) für die Schulter (13) des Isolators in einem Abstand vom brennraumseitigen Ende der Bohrung (8a) vorgesehen ist, der in Verbindung mit der Länge des Isolatorunterteils (4a) unterhalb der weiteren Schulter (13) die gewünschte Funkenlage ergibt, sobald der Isolator (1) in die Bohrung (8a) eingeschraubt ist.

14. Zündkerze nach einem der Ansprüche 2 bis 13, **dadurch gekennzeichnet, dass** am Isolatoroberteil (2) eine Anschlussmutter (3) vorgesehen ist, deren Länge derart bemessen ist, dass die Gesamtlänge zwischen einer Schulter (8d) am Gehäuse (8) bis zum oberen Ende der Anschlussmutter (3) einer üblichen Zündkerze entspricht.

## Claims

1. A sparkplug with sensor function, having a housing (8) and at least one measuring device (12) arranged in the housing (8), wherein as one of the measuring devices (12), a pressure measuring device is provided and has a pressure measuring element (12a) that is arranged on the combustion chamber side in a recess of the housing (8), and the pressure measuring element (12a) has a piezoelectric element that is acted on with pressure by a sensor membrane, **characterized in that** the sensor membrane has a thickening in the central region **and that** the thickening is substantially entirely directed outwards facing away from the piezoelectric element.

2. The sparkplug according to claim 1, **characterized in that** the sparkplug has an insulator (1) with an insulator upper part (2) having a high voltage terminal and an insulator lower part (4) that faces the combustion chamber and has a smaller diameter or the same diameter compared to the insulator upper part (2), **and that** on the insulator lower part (4), preferably on the upper end thereof that adjoins the insulator upper part (2), a union nut (7) having an external thread is fastened in a captive manner.

3. The sparkplug according to claim 2, **characterized in that** at on the insulator lower part (4) there is provided at least one counter bearing having a shoulder (6) directed towards the insulator upper part (2) for fastening the union nut (7), preferably a thickening on the insulator lower part (4) or a circumferentially extending groove.

4. The sparkplug according to claim 3, **characterized in that** the edge (7a) of the union nut (7), which edge faces towards the insulator upper part (2), is thickened or flanged towards the inside and engages in this manner behind the shoulder (6) on the insulator lower part (4).

5. The sparkplug according to claim 3, **characterized in that** between the shoulder (6) and the union nut (7), at least one holding element (9, 10, 11) is placed that bridges the cross-sectional difference between a holding region (7a) of the union nut (7) and the shoulder (6) of the insulator lower part (4), preferably a spring ring (9), retaining ring (10) or a pressed-in bending member (11).

6. The sparkplug according to claim 3, **characterized in that** the union nut (7) is configured to be divided in its longitudinal plane.

7. The sparkplug according to any one of the claims 2 to 6, **characterized in that** the insulator upper part (2) and the insulator lower part (4) are each configured to be substantially radially symmetrical, wherein the axes (U) of the insulator lower part (4) and the union nut (7) fastened thereto are radially offset with respect to the axis (O) of the insulator upper part (2), and thus the insulator lower part (4) is connected eccentrically to the insulator upper part (2).

8. The sparkplug according to any one of the claims 2 to 7, **characterized in that** the insulator upper part (2) is formed as one piece with the insulator lower part (4).

9. The sparkplug according to any one of the claims 2 to 8, **characterized in that** at least the high voltage terminal corresponds substantially to a conventional sparkplug.

10. The sparkplug according to any one of the claims 2 to 9, **characterized in that** the insulator (1) is screwed by means of the union nut (7) into a threaded drilled hole (8b) of the housing (8).

11. The sparkplug according to any one of the claims 2 to 10, **characterized in that** a continuous drilled hole (8a) is arranged eccentrically in the housing (8), wherein only the insulator lower part (4) is accommodated in the eccentric drilled hole (8a).

12. The sparkplug according to any one of the claims 2 to 11, **characterized in that** the drilled hole (8a) is substantially coaxial to the sparkplug axis, and the insulator upper part (2) arranged eccentrically with respect to the insulator lower part (4) is likewise aligned coaxial and radially symmetrical to the sparkplug axis.

13. The sparkplug according to any one of the claims 2 to 12, **characterized in that** the insulator lower part (4) is provided with a further shoulder (13) that is directed towards the free end of the insulator lower part, and that a limit stop (8c) for the shoulder (13) of the insulator is provided in the drilled hole (8a) in the housing (8) of the sparkplug at a distance from that end of the drilled hole (8a) that is situated at the combustion chamber side, said limit stop, in connection with the length of the insulator lower part (4a) below the further shoulder (13), results in the desired spark position as soon as the insulator (1) is screwed into the drilled hole (8a).

14. The sparkplug according to any one of the claims 2 to 13, **characterized in that** a terminal nut (3) is provided at the insulator upper part (2), the length of which terminal nut is dimensioned such that the total length between a shoulder (8d) on the housing (8) up to the upper end of the terminal nut (3) corresponds to a conventional sparkplug.

## Revendications

1. Bougie d'allumage avec une fonction de capteur, avec un boîtier (8) et avec au moins un dispositif mesure (12) agencé dans le boîtier (8), dans laquelle il est prévu un dispositif de mesure de pression en tant qu'un des dispositifs de mesure (12), lequel comporte un élément de mesure de pression (12a) agencé dans un évidement du boîtier (8) côté chambre de combustion, l'élément de mesure de pression (12a) comportant un élément piézoélectrique soumis à une pression par une membrane de capteur, **caractérisée en ce que** la membrane de capteur comporte un épaississement dans la région centrale, **et en ce que** l'épaississement est orienté quasiment entièrement vers l'extérieur, à distance de l'élément piézoélectrique.

2. Bougie d'allumage selon la revendication 1, **caractérisée en ce que** la bougie d'allumage comporte un isolateur (1) avec une partie supérieure d'isolateur (2) avec une borne haute tension, et avec une partie inférieure d'isolateur (4) tournée vers la chambre de combustion, laquelle présente un diamètre inférieur ou égal à celui de la partie supérieure d'isolateur (2), **et en ce que** sur la partie inférieure d'isolateur (4), de préférence à l'extrémité supérieure de celle-ci adjacente à la partie supérieure d'isolateur (2), un écrou-chapeau (7) comportant un filet extérieur est fixé de préférence de manière imperdable.

3. Bougie d'allumage selon la revendication 2, **caractérisée en ce que** sur la partie inférieure d'isolateur (4), il est prévu au moins une butée avec une épaule (6) orientée vers la partie supérieure d'isolateur (2), pour la fixation de l'écrou-chapeau (7), de préférence un épaississement sur la partie inférieure d'isolateur (4) ou par une encoche périphérique.

4. Bougie d'allumage selon la revendication 3, **caractérisée en ce que** le bord (7a) de l'écrou-chapeau (7) tourné vers la partie supérieure d'isolateur (2) est épaissi ou rabattu et vient ainsi en prise derrière l'épaule (6) sur la partie inférieure d'isolateur (4).

5. Bougie d'allumage selon la revendication 3, **caractérisée en ce qu**'au moins un élément de maintien (9, 10, 11) est inséré entre l'épaule (6) et l'écrou-chapeau (7), lequel chevauche la différence de section transversale entre une région de maintien (7a) de l'écrou-chapeau (7) et l'épaule (6) de la partie inférieure d'isolateur (4), de préférence un anneau élastique (9), un anneau de blocage (10) ou une tige de flexion (11) enfoncée.

6. Bougie d'allumage selon la revendication 3, **caractérisée en ce que** l'écrou-chapeau (7) est conçu divisé dans son plan longitudinal.

7. Bougie d'allumage selon l'une des revendications 2 à 6, **caractérisée en ce que** la partie supérieure d'isolateur (2) et la partie inférieure d'isolateur (4) sont respectivement conçues de façon essentiellement symétrique radialement, les axes (U) de la partie inférieure d'isolateur (4) et de l'écrou-chapeau (7) fixé à celle-ci sont décalés radialement par rapport à l'axe (O) de la partie supérieure d'isolateur (2), la partie inférieure d'isolateur (4) s'appliquant ainsi de façon excentrique sur la partie supérieure d'isolateur (2).

8. Bougie d'allumage selon l'une des revendications 2 à 7, **caractérisée en ce que** la partie supérieure d'isolateur (2) est conçue d'une seule pièce avec la partie inférieure d'isolateur (4).

9. Bougie d'allumage selon l'une des revendications 2 à 8, **caractérisée en ce qu**'au moins la borne haute tension correspond essentiellement à une bougie d'allumage classique.

10. Bougie d'allumage selon l'une des revendications 2 à 9, **caractérisée en ce que** l'isolateur (1) est vissé dans un alésage fileté (8b) du boîtier (8) au moyen de l'écrou-chapeau (7).

11. Bougie d'allumage selon l'une des revendications 2 à 10, **caractérisée en ce qu'**un alésage traversant (8a) est agencé de façon excentrée dans le boîtier (8), dans laquelle seule la partie inférieure d'isolateur (4) est admise dans l'alésage excentré (8a).

12. Bougie d'allumage selon l'une des revendications 2 à 11, **caractérisée en ce que** l'alésage (8a) est essentiellement coaxial par rapport à l'axe de la bougie d'allumage, et la partie supérieure d'isolateur (2) agencée de façon excentrique par rapport à la partie inférieure d'isolateur (4) est également orientée coaxialement et de préférence de façon radialement symétrique par rapport à l'axe de la bougie d'allumage.

13. Bougie d'allumage selon l'une des revendications 2 à 12, **caractérisée en ce que** la partie inférieure d'isolateur (4) est pourvue d'une autre épaule (13) orientée vers son extrémité libre, et **en ce qu'**une butée (8c) pour l'épaule (13) de l'isolateur est prévue dans l'alésage (8a) dans le boîtier (8), à une distance de l'extrémité de l'alésage (8a) côté chambre de combustion, laquelle donne la position d'étincelle souhaitée en association avec la longueur de la partie inférieure d'isolateur (4a) sous l'autre épaule (13), dès que l'isolateur (1) est vissé dans l'alésage (8a).

14. Bougie d'allumage selon l'une des revendications 2 à 13, **caractérisée en ce qu'**un écrou de connexion (3) est prévu sur la partie supérieure d'isolateur (2), dont la longueur est définie de manière à ce que la longueur totale entre une épaule (8d) sur le boîtier (8) et l'extrémité supérieure de l'écrou de connexion (3) corresponde à une bougie d'allumage classique.
